# EUROPÄISCHE PATENTANMELDUNG

(11) **EP 1 291 202 A2**
(43) Veröffentlichungstag der Anmeldung: **12.03.2003**
(21) Anmeldenummer: 02017969.3
(22) Anmeldetag: 10.08.2002
(51) Int. Cl.: B60H 1/00

(54) **Temperaturerfassung mittels Transmittler und auf die Steuergeräteplatine integriertem Temperatursensor**

(30) Priorität: 11.09.2001 DE 10144612
(71) Anmelder: J. Eberspächer GmbH Co. KG, 73730 Esslingen (DE)
(72) Erfinder: Humburg, Michael, 73035 Göppingen (DE)

(57) **Zusammenfassung**

Bei einem Heizgerät, insbesondere mit Flüssigbrennstoff betriebenen Wasserheizgerät (20) oder Luftheizgerät eines Kraftfahrzeuges in Form eines Zuheizers oder einer Standheizung, mit einem Gehäusemantel (1) und einem Wärmetauscher (2) sowie mit einem elektronischen Steuergerät (11) zur Regelung bzw. Überwachung des Heizbetriebes mit Hilfe zumindest eines Temperaturfühlers (3), insbesondere Regeltemperaturfühlers und/oder Überhitzungsfühlers, wird vorgeschlagen, ein hoch-wärmeleitendes Temperatur-Übertragungselement, einen sogenannten Transmitter (10) vorzusehen, der einen im Bereich der Steuergeräteplatine (4) des Steuergeräts (11) angeordneten, an der Steuergeräteplatine angeschlossenen Temperaturfühler (3) kontaktiert, wobei der Transmitter (10) sich durch eine Öffnung (6) des Gehäusemantels (1), insbesondere Wassermantels, in Richtung Wärmetauscher (2) an eine Stelle erstreckt, deren Temperatur vom Transmitter (10) übertragen und vom Temperaturfühler (3) zur Regelung bzw. zur Überwachung des Heizbetriebes des Heizgerätes erfaßt werden soll. Ein erfindungsgemäßer Transmitter ist wesentlich kostengünstiger und unempfindlicher als ein separater Temperaturfühler wie nach dem Stand der Technik.

## Beschreibung

Die Erfindung betrifft ein Heizgerät, insbesondere mit Flüssigbrennstoff betriebenes Wasser- oder Luftheizgerät eines Kraftfahrzeuges in Form eines Zuheizers oder einer Standheizung, mit einem Gehäusemantel und einem Wärmetauscher sowie mit einem elektronischen Steuergerät zur Regelung bzw. Überwachung des Heizbetriebes mit Hilfe zumindest eines Temperaturfühlers, insbesondere Regeltemperaturfühlers und/oder Überhitzungsfühlers.

Bei Fahrzeugheizgeräten der vorgenannten Art wird für die Raumtemperaturregelung ein Temperaturfühler in Form eines Regeltemperaturfühlers verwendet, der vorzugsweise im Luftoder Wasserführungskanal im Bereich des Wärmetauschers angeordnet und Istwertgeber eines Regelkreises ist. Das Steuergerät regelt die Heizleistung in der Weise, daß die Raumtemperatur dem vorgegebenen Sollwert mit möglichst geringer Abweichung entspricht. Ein weiterer Temperaturfühler in Form eines Überhitzungsfühlers, der an geeigneter heißer Stelle im Heizgerät, insbesondere im Kalottenbereich eines Wärmetauschers, liegt, dient zur oberen Temperaturbegrenzung des Heizgerätes durch Abschalten des Heizgerätes, um einen Überhitzungszustand im Heizgerät auszuschließen.

Ein derartiges Fahrzeugheizgerät ist beispielsweise aus DE 44 46 829 A1 bekannt. Von Nachteil ist, daß der Regeltemperaturfühler und der Überhitzungsfühler als separate Bauteile mit längeren Kabeln, Kontakten und Einzeladerabdichtungen vorgefertigt sind und einzeln disponiert, der Montage zugeführt, montiert und von separaten Bauteilen gehalten werden. Beide Fühler sind identische Bauteile und können am Steuergerätestecker vertauscht werden. Um die Regelung der Heizleistung und die Sicherheit vor Überhitzung und ein Durchbrennen des Wärmetauschers zu gewährleisten, kommt der sicheren Kontaktierung der separaten Temperatursensoren an der Wärmetauscher-Oberfläche besondere Bedeutung zu. Der betreffende Sensor muß "Bewegungen" und Wärmeausdehnungen folgen. Die Leistungsfähigkeit des bekannten Systems ist grundsätzlich sehr gut, die Kosten der Fertigung sind jedoch relativ hoch.

Ausgehend vom vorgenannten Stand der Technik ist es Aufgabe der Erfindung, ein Heizgerät der eingahgs genannten Art derart weiterzubilden, daß es einfach, schnell und sicher montiert werden kann, zuverlässig im Betrieb ist und insbesondere mit geringem Fertigungsaufwand einhergeht.

Gelöst wird die der Erfindung zugrundeliegende Aufgabe durch ein Heizgerät der im unabhängigen Anspruch 1 angegebenen Art.

Vorteilhaft weitergebildet wird das Heizgerät durch die Merkmale der abhängigen Ansprüche 2 bis 17.

Wesen der Erfindung ist, daß der im Bereich der Steuergeräteplatine des Steuergeräts angeordnete, an der Steuergeräteplatine angeschlossene Temperaturfühler ein hoch-wärmeleitendes Temperatur-Übertragungselement, einen sogenannten Transmitter, kontaktiert, welches bzw. welcher sich seinerseits durch eine Öffnung des Gehäusemantels, insbesondere Wassermantels, in Richtung Wärmetauscher erstreckt. Anstelle eines separaten Temperaturfühlers nach dem Stand der Technik wird erfindungsgemäß ein wesentlich kostengünstigeres unempfindlicheres Übertragungselement, nämlich der "Transmitter", als Sonde dazu verwendet, in den zu messenden Temperaturbereich des Heizgerätes vorzudringen, wobei bei einem Wasserheizgerät der Transmitter vorzugsweise ins Heizwasser getaucht ist und/oder mit der Wärmetauscher-Oberfläche kontaktiert. An diesem Transmitter greift der auf der Steuergeräteplatine positionierte Temperaturfühler die Temperaturen ab. Der Temperaturfühler ist vorzugsweise als Bauteil auf der Leiterplatte des Steuergeräts bzw. der Steuergeräteplatine gelötet. Mithin kann durch die Erfindung auf separate aufwendige Temperaturfühler verzichtet werden. Eine für Anmelder-Heizgeräte typische "direkte" Erfassung der Wärmetauscheroberflächen-Temperatur ist weiterhin möglich. Die Erfindung eignet sich für alle Luft- und Wasserheizgeräte jeglicher Leistungsklasse, insbesondere bei Kraftfahrzeugen.

Ein Temperaturfühler kann bereits bei der Steuergerätefertigung auf die Steuergeräteplatine gesetzt und die vorgefertigte Steuergeräteplatine nebst angeschlossenem Temperaturfühler am Heizgerät leicht und schnell mit positioniertem Transmitter endmontiert werden. Als Positionierhilfe dient hierbei die Öffnung im Gehäusemantel.

Vorzugsweise ist der die Unterseite des Temperaturfühlers kontaktierende Transmitter verschieblich in der als Paßöffnung ausgebildeten Öffnung des Gehäusemantels aufgenommen. Dadurch ist eine Feinpositionierung des Transmitters möglich. Außerdem kann die Erstreckungstiefe des Transmitters in Richtung Wärmetauscher gegebenenfalls exakt eingestellt werden.

Der Transmitter weist vorzugsweise einen Paßgehäuseteil mit einer Umfangsaussparung auf, wobei der Außenumfang des Paßgehäuseteils in einem Verschiebesitz in der Paßöffnung direkt oder indirekt aufgenommen ist. Dadurch ist das Einschieben des Transmitters in die Paßöffnung erleichtert und ein Verklemmen oder Verkanten minimiert.

Bevorzugt befindet sich in der Umfangsaussparung ein Dichtring, der für eine gute Abdichtung des im Heizgerät geführten aufzuheizenden Mediums, Luft oder Wasser, sorgt.

Eine besonders zweckmäßige Ausführungsvariante sieht vor, daß ausschließlich der wärmeisolierende Dichtring die als Paßöffnung ausgebildete Öffnung des Gehäusemantels kontaktiert, und nicht der Transmitter, der ein hoch-wärmeleitendes Bauteil ist. Auf diese Weise gelangt Wärme nicht durch Wärmeleitung in den benachbarten Gehäusemantel, sondern verbleibt im Transmitter.

Eine andere Ausführungsform sieht vor, daß der Temperaturfühler nebst Transmitter über eine im Steuergerät befindliche Druckfeder an einem Schutzgehäuse des Steuergeräts abgestützt sind. Im eingebauten Zustand des Transmitters und Temperaturfühlers wird damit gewährleistet, daß zum Beispiel durch Temperaturschwankungen verursachte Ausdehnungen (Bewegungen) des Wärmetauschers ohne Schädigung des Transmitters, des Temperaturfühlers, des Steuergeräts oder des Wärmetauschers absorbiert werden können.

Vorzugsweise weist der Gehäusemantel in Axialverlängerung der Paßöffnung zumindest einen von der Paßöffnung entfernten, radial nach außen gerichteten Vorsprung auf, auf dem die Steuergeräteplatine flächig abgestützt ist. Dadurch ergibt sich eine satte, stabile Auflage für die Steuergeräteplatine. Außerdem kann die Steuergeräteplatine in einem Abstand zum Gehäusemantel vorzugsweise achsparallel angeordnet werden. Der Abstand schafft einen wärmeisolierenden Luftspalt zwischen Gehäusemantel und Steuergeräteplatine.

Der Transmitter weist insbesondere im wesentlichen Zylinderform auf.

Die Steuergeräteplatine ist vorzugsweise lösbar auf dem oder den Vorsprüngen aufgesteckt und flächig an diesen Vorsprüngen abgestützt.

Im besonderen ist die Oberseite der Steuergeräteplatine in einem Abstand zum Schutzgehäuse angeordnet, um einen Einbauraum für elektronische Bauteile zu schaffen, die vorzugsweise an der Oberseite der Steuergeräteplatine befestigt und angeschlossen sind.

Der Temperaturfühler ist mit Vorzug ein integriertes Bauteil der Steuergeräteplatine, welches an der Steuergeräteplatine anschlußherstellend angesteckt, angelötet oder anderweitig befestigt ist. Ein mögliches Anschlußkabel kann dadurch eine kurze Länge aufweisen. Einzeladerabdichtungen entfallen.

Der Transmitter kann an einem radial inneren Anschlag des Heizgerätes durch die Kraft der Druckfeder federvorgespannt sein. Der radial innere Anschlag kann ein Absatz bzw. eine Verjüngung in der Öffnung des Gehäusemantels sein.

Besonders bevorzugt ist jedoch der radial innere Anschlag eine Mantelfläche des Wärmetauschers selbst, die insbesondere eine Kontaktfläche des Temperaturfühlers ist, deren Temperatur zu überwachen ist. Damit ist ein sicherer, spielfreier und spannungsfreier Kontakt des Transmitters und des Temperaturfühlers zum Wärmetauscher mit einfachen Mitteln hergestellt, und zwar ohne die Gefahr einer Beschädigung des Sensors und des Transmitters im Betrieb durch mögliche Temperaturschwankungen bzw. Wärmeausdehnungen.

Der Temperaturfühler kann ein Einzelfühler sein, insbesondere ein Überhitzungstemperaturfühler oder eine Regeltemperaturfühler, wobei an einer einzigen Steuergeräteplatine auch mehrere von einander beabstandete Temperaturfühler angeordnet sein können. Jedem Temperaturfühler ist dann ein eigener Transmitter zugeordnet.

Bevorzugt ist der Temperaturfühler ein Kombinationsfühler, welcher den Überhitzungsfühler und den Regeltemperaturfühler als Baueinheit enthält, was Vorteile in der Fertigung und in der Montage mit sich bringt. Überhitzungsfühler und Regeltemperaturfühler können dann auch nicht bei der Montage vertauscht werden. Überhitzungsfühler und Regeltemperaturfühler weisen eigene Transmitter auf.

Das Schutzgehäuse selbst ist fest und wasserdicht mit dem Gehäusemantel verbunden, insbesondere verschraubt.

Die Erfindung wird nachfolgend anhand eines Ausführungsbeispiels unter Bezugnahme auf die beigefügte Zeichnung näher erläutert.

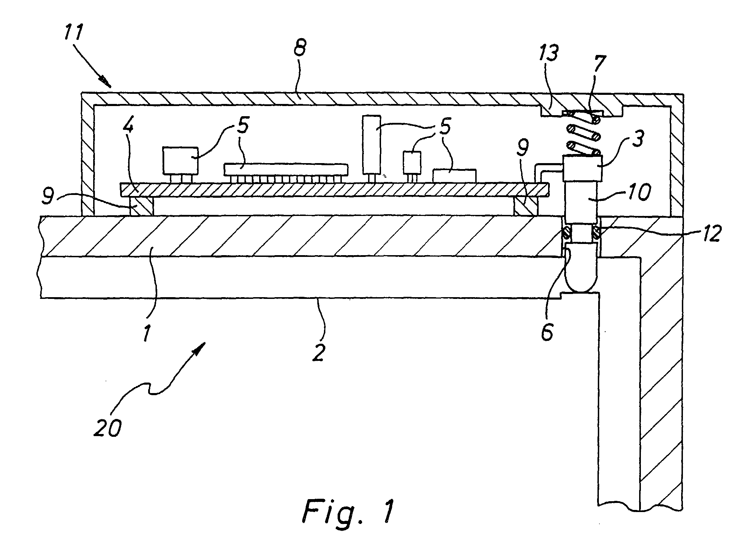

In Figur 1 der einzigen Zeichnung ist schematisch in einem axialen Vertikalschnitt der rechte obere Bereich eines Heizgerätes veranschaulicht.

Das Heizgerät ist insbesondere ein mit Flüssigbrennstoff betriebenes Wasserheizgerät 20 eines Kraftfahrzeuges in Form einer Standheizung und besitzt unter anderem einen Gehäusemantel 1 in Form eines Wassermantels, einen Wärmetauscher 2 sowie ein Steuergerät 11 zur Regelung bzw. Überwachung des Heizbetriebes mit Hilfe eines Temperaturfühlers 3.

Der Temperaturfühler 3 ist seitlich von einer Steuergeräteplatine 4 des Steuergerät 11 angeordnet und an die Steuergeräteplatine über Anschlußkabel positioniert angelötet. Der Temperaturfühler 3 erstreckt sich gemäß Zeichnung nach unten, wobei sich direkt an die Unterseite des Temperaturfühlers 3 ein hoch-wärmeleitendes Wärme-Übertragungselement, ein sogenannter Transmitter 10, kontaktierend anschließt und sich durch eine Öffnung 6 des Gehäusemantels 1 in Richtung Wärmetauscher 2 erstreckt.

Der an der Unterseite des Temperaturfühlers 3 angeschlossene Transmitter 10 ist verschieblich in der als Paßöffnung ausgebildeten Öffnung 6 des Gehäusemantels 1 aufgenommen.

Der Transmitter 10 weist einen Paßgehäuseteil mit einer Umfangsaussparung auf, wobei der Außenumfang des Paßgehäuseteils in einem Verschiebesitz in der Paßöffnung aufgenommen sein kann. In der Umfangsaussparung ist ein Dichtring 12 aufgenommen, welcher so konzipiert ist, daß im Ausführungsbeispiel der Zeichnung ausschließlich der Dichtring 12 den Gehäusemantel 1 im Bereich der Paßöffnung kontaktiert.

Der Transmitter 10 und der Temperaturfühler 3 sind über eine im Steuergerät 11 befindliche Druckfeder 7 an einem Schutzgehäuse 8 des Steuergeräts 11 abgestützt. Hierfür ist eine entsprechende Paßaussparung in einem im Schutzgehäuse 8 integrierten Vorsprung 13 zur formschlüssigen Aufnahme des oberen Axialendes der Druckfeder 7 vorgesehen.

Der Gehäusemantel 1 weist in Axialverlängerung der Paßöffnung zwei von der Paßöffnung entfernte, radial nach außen gerichtete voneinander beabstandete Vorsprünge 9 auf, auf denen die Steuergeräteplatine 4 aufgesteckt und flächig abgestützt ist.

Die Oberseite der Steuergeräteplatine 4 befindet sich in einem Abstand zum Schutzgehäuse 8. An der Oberseite der Steuergeräteplatine 4 sind diverse hier nicht näher interessierende elektronische Bauteile 5 befestigt und angeschlossen.

Der Transmitter 10 ist an einem radial inneren Anschlag des Heizgerätes durch die Kraft der Druckfeder 7 federvorgespannt. Der radial innere Anschlag ist insbesondere eine Mantelfläche des Wärmetauschers 2. Die Mantelfläche ist eine radial erhabene Kontaktfläche für den Transmitter 10, deren Temperatur zu überwachen ist.

Das Schutzgehäuse 8 ist fest und wasserdicht mit dem Gehäusemantel 1 verschraubt.

Ersichtlich läßt sich das vorgenannte Wasserheizgerät 20 einfach, schnell und sicher montieren und insbesondere kostengünstig fertigen.

Der Temperaturfühler 3 wird bereits bei der Steuergerätefertigung auf der Steuergeräteplatine 4 bestückt und angeschlossen. Ferner werden in Vorfertigung der Steuergeräteplatine die elektronischen Bauteile 5 gesetzt und angeschlossen.

Dann wird über den Transmitter 10 der Dichtring 12 in die zugehörige Umfangsaussparung gestülpt, und der Transmitter 10 einschließlich Dichtring 12 in die radiale Paßöffnung des Gehäusemantels 1 eingesetzt. Das vorderste gemäß Zeichnung unterste Ende des Transmitters 10 berührt hierbei den radialen Vorsprung des Mantels des Wärmetauschers 2. Anschließend wird die vorgefertigte Steuergerätplatine 4 auf die Vorsprünge 9 gesteckt, wobei dann der Temperaturfühler 3 die axiale obere Seite des Transmitters 10 kontaktiert. Der Temperaturfühler 3 und der vorzugsweise zylindrische Transmitter 10 sind hierbei axial zueinander ausgerichtet. Im Anschluß hieran wird in axialer Ausrichtung zu den beiden vorgenannten Bauteilen die Druckfeder 7 auf den Temperaturfühler 3 aufgesetzt. Schließlich wird das Schutzgehäuse 8 auf den Gehäusemantel 1 so aufgesetzt, daß in die Formaussparung im Vorsprung 13 das obere Ende der Druckfeder 7 eingreift. Das Schutzgehäuse 8 wird fest und wasserdicht mit dem Gehäusemantel verschraubt. Nach dem Verschrauben ist die Druckfeder 7 in einer Weise federvorgespannt, daß einerseits der Transmitter 10 sicher am Wärmetauscher 2 und andererseits der Transmitter 10 sicher am Temperaturfühler 3 anliegt, jedoch Transmitter 10 und Temperaturfühler 3 radial nach außen nachgeben können, wenn erhöhte Spannungen anliegen. Auch ist dann die axiale Ausrichtung der Druckfeder 7, des Temperaturfühlers 3 und des Transmitters 10 gewährleistet. Eine Axialverschiebung der vorgenannten Bauteile wird gegebenenfalls durch das Anschlußkabel des Temperaturfühlers 3 ausgeglichen, welches zur Steuergeräteplatine 4 führt.

## Patentansprüche

1. Heizgerät, insbesondere mit Flüssigbrennstoff betriebenes Wasserheizgerät (10) oder Luftheizgerät eines Kraftfahrzeuges in Form eines Zuheizers oder einer Standheizung, mit einem Gehäusemantel (1) und einem Wärmetauscher (2) sowie mit einem elektronischen Steuergerät (11) zur Regelung bzw. Überwachung des Heizbetriebes mit Hilfe zumindest eines Temperaturfühlers (3), insbesondere Regeltemperaturfühlers und/oder Überhitzungsfühlers,
**dadurch gekennzeichnet,**
**daß** der im Bereich der Steuergeräteplatine (4) des Steuergeräts (11) angeordnete, an der Steuergeräteplatine angeschlossene Temperaturfühler (3) ein hoch-wärmeleitendes Temperatur-Übertragungselement, einen sogenannten Transmitter (10), kontaktiert, welches bzw. welcher sich seinerseits durch eine Öffnung (6) des Gehäusemantels (1), insbesondere Wassermantels, in Richtung Wärmetauscher (2) erstreckt.

2. Heizgerät nach Anspruch 1,
**dadurch gekennzeichnet,**
**daß** der die Unterseite des Temperaturfühlers (3) kontaktierende Transmitter (10) verschieblich in der als Paßöffnung ausgebildeten Öffnung (6) des Gehäusemantels (1) aufgenommen ist.

3. Heizgerät nach Anspruch 2,
**dadurch gekennzeichnet,**
**daß** der Transmitter (10) einen Paßgehäuseteil mit einer Umfangsaussparung aufweist, wobei der Außenumfang des Paßgehäuseteils in einem Verschiebesitz in der Paßöffnung aufgenommen ist.

4. Heizgerät nach Anspruch 3,
**dadurch gekennzeichnet,**
**daß** in der Umfangsaussparung ein Dichtring (12) aufgenommen ist.

5. Heizgerät nach Anspruch 4,
**dadurch gekennzeichnet,**
**daß** ausschließlich der Dichtring (12) die als Paßöffnung ausgebildeten Öffnung (6) des Gehäusemantels (1) kontaktiert.

6. Heizgerät nach einem der Ansprüche 1 bis 5,
**dadurch gekennzeichnet,**
**daß** der Temperaturfühler (3) und der Transmitter (10) über eine im Steuergerät (11) befindliche Druckfeder (7) an einem Schutzgehäuse (8) des Steuergeräts (11) abgestützt sind.

7. Heizgerät nach einem der Ansprüche 1 bis 6,
**dadurch gekennzeichnet,**
**daß** der Gehäusemantel (1) in Axialverlängerung der Paßöffnung zumindest einen von der Paßöffnung entfernten, radial nach außen gerichteten Vorsprung (9) aufweist, auf dem die Steuergeräteplatine (4) flächig abgestützt ist.

8. Heizgerät nach einem der Ansprüche 1 bis 7,
**dadurch gekennzeichnet,**
**daß** der Transmitter (10) im wesentlichen Zylinderform besitzt.

9. Heizgerät nach Anspruch 7 oder 8,
**dadurch gekennzeichnet,**
**daß** die Steuergeräteplatine (4) auf der Unterseite eine Formaussparung aufweist, welche mit dem Vorsprung (9) in eine lösbare Steckverbindung bringbar ist.

10. Heizgerät nach einem der Ansprüche 6 bis 9,
**dadurch gekennzeichnet,**
**daß** die Oberseite der Steuergeräteplatine (4) in einem Abstand zum Schutzgehäuse (8) angeordnet ist, und daß an der Oberseite der Steuergeräteplatine (4) elektronische Bauteile (5) befestigt und angeschlossen sind.

11. Heizgerät nach einem der Ansprüche 1 bis 10,
**dadurch gekennzeichnet,**
**daß** der Temperaturfühler (3) ein vorzugsweise integriertes Bauteil der Steuergeräteplatine (4) ist, welches an der Steuergeräteplatine (4) anschlußherstellend angesteckt oder angelötet ist.

12. Heizgerät nach einem der Ansprüche 6 bis 11,
**dadurch gekennzeichnet,**
**daß** der Transmitter (10) an einem radial inneren Anschlag des Heizgerätes durch die Kraft der Druckfeder (7) federvorgespannt ist.

13. Heizgerät nach Anspruch 12,
**dadurch gekennzeichnet,**
**daß** der radial innere Anschlag eine Mantelfläche des Wärmetauschers (2) ist.

14. Heizgerät nach Anspruch 13,
**dadurch gekennzeichnet,**
**daß** die Mantelfläche eine Kontaktfläche des Transmitters (10) ist, deren Temperatur zu überwachen ist.

15. Heizgerät nach einem der Ansprüche 1 bis 14,
**dadurch gekennzeichnet,**
**daß** der Temperaturfühler (3) ein Einzelfühler ist, insbesondere ein Überhitzungstemperaturfühler oder eine Regeltemperaturfühler ist.

16. Heizgerät nach einem der Ansprüche 1 bis 14,
**dadurch gekennzeichnet,**
**daß** der Temperaturfühler (3) ein Kombinationsfühler ist, welcher den Überhitzungsfühler und den Regeltemperaturfühler als Baueinheit enthält, wobei dem Überhitzungsfühler und dem Regeltemperaturfühler jeweils ein eigener Transmitter (10) zugeordnet sind.

17. Heizgerät nach einem der Ansprüche 6 bis 16,
**dadurch gekennzeichnet,**
**daß** das Schutzgehäuse (8) fest und wasserdicht mit dem Gehäusemantel (1) verbunden, insbesondere verschraubt, ist.
